# EUROPEAN PATENT SPECIFICATION

(11) **EP 2 881 454 B1**
(45) Date of publication and mention of the grant of the patent: **30.10.2019**
(21) Application number: 13828281.9
(22) Date of filing: 31.07.2013
(51) Int. Cl.: C10M 163/00, C10M 125/02, C10M 125/18, C10M 129/40, C10M 133/42, C10M 159/02, C10M 159/04, C10M 159/24, C10N 10/04, C10N 30/00, C10N 40/00, F16L 15/04

(54) **TUBULAR THREADED JOINT AND LUBRICATING COATING FORMING COMPOSITION FOR USE THEREIN**
RÖHRENFÖRMIGE GEWINDEVERBINDUNG UND SCHMIERBESCHICHTUNGSBILDENDE ZUSAMMENSETZUNG ZUR VERWENDUNG DARIN
JOINT FILETÉ TUBULAIRE ET COMPOSITION DE FORMATION DE REVÊTEMENT LUBRIFIANT UTILISÉE POUR CELUI-CI

(30) Priority: 06.08.2012 JP 2012174117
(43) Date of publication of application: 10.06.2015
(73) Proprietor: Nippon Steel Corporation, Tokyo (JP); VALLOUREC OIL AND GAS FRANCE, 59620 Aulnoye-Aymeries (FR)
(72) Inventor: GOTO, Kunio, Tokyo 100-8071 (JP); TANAKA, Yuuji, Tokyo 100-8071 (JP)
(74) Representative: Vossius & Partner Patentanwälte Rechtsanwälte mbB
(86) International application number: PCT/JP2013/070795
(87) International publication number: WO 2014/024755

(56) References cited:
- EP-A1- 2 210 931
- WO-A1-2009/072486
- WO-A1-2012/017815
- WO-A1-2012/060472
- CN-A- 101 619 261
- JP-A- 2002 173 692
- JP-A- 2004 053 013
- JP-A- 2008 537 062
- DATABASE CA [Online] CHEMICAL ABSTRACTS SERVICE, COLUMBUS, OHIO, US; 31 December 2002 (2002-12-31), HIRONAKA, SEIICHIRO ET AL: "Effect of sericite-molybdenum disulfide system on screw lubricants performances under high temperatures", XP002753723, retrieved from STN Database accession no. 2002:205470 & HIRONAKA, SEIICHIRO ET AL: "Effect of sericite-molybdenum disulfide system on screw lubricants performances under high temperatures", JOURNAL OF THE JAPAN PETROLEUM INSTITUTE , 45(2), 103-108 CODEN: JJPIAP; ISSN: 1346-8804, 2002, DOI: 10.1627/JPI.45.103 10.1627/JPI.45.103

## Description

### TECHNICAL FIELD

The present invention relates to a tubular threaded joint for use in connecting steel pipes and particularly oil country tubular goods, and a surface treatment method thereof.

Priority is claimed on Japanese Patent Application No. 2012-174117, filed on August 6, 2012.

### BACKGROUND ART

Oil country tubular goods such as tubing and casing used in oil well drilling for excavation of crude oil or gas oil are usually connected (jointed) to each other by a tubular threaded joint. In the past, the depth of the oil wells was 2,000 to 3,000 m, but in deep oil wells such as recent offshore oil fields, the depth may reach 8,000 to 10,000 m. The length of the oil country tubular goods is typically several tens of meters, and the periphery of tubing through which a fluid such as crude oil flows is surrounded with a plurality of casings, and thus the number of the oil country tubular goods jointed by the threaded joint reaches a vast number.

Under a service environment, a load that is an axial tensile force caused by the weight of the oil country tubular goods and the joint themselves, a composite pressure of an internal pressure and an external pressure, and geothermal heat are applied to the tubular threaded joint for oil country tubular goods. Therefore, there has been a demand for the tubular threaded joint to maintain gastightness without undergoing damage even in such a severe environment.

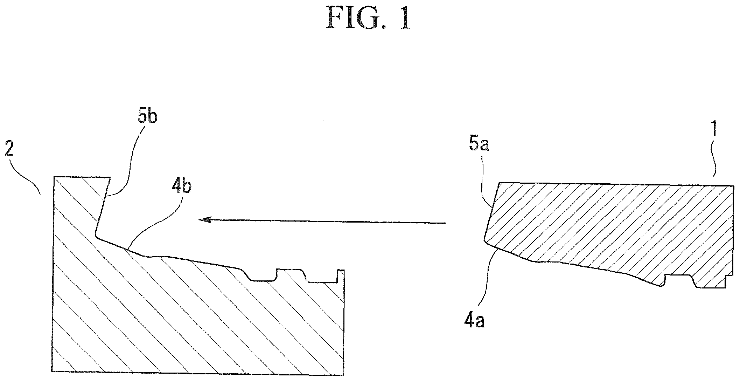

A typical tubular threaded joint (also, called special threaded joint) used for connecting oil country tubular goods has a pin-box structure. A pin, which is a joint member having a male thread, is typically formed at both ends of the oil country tubular goods. A box, which is a counterpart joint member having a female thread that is screwed to the male thread is typically formed at both-side internal surfaces of a coupling that is a separate member. As shown in FIG. 1, seal portions 4a and 4b are provided at an outer peripheral portion close to an end surface on the front end side in relation to the male thread of the pin, and on an internal peripheral surface of the base portion of the female thread of the box, respectively. Shoulder portions (also called torque shoulder) 5a and 5b are provided at the end surface of the front end of the pin 1, and the deepest portion of the box 2 which corresponds to the end surface. The seal portions 4a and 4b, and the shoulder portions 5a and 5b constitute an unthreaded metal contact portion of the tubular threaded joint, and the unthreaded metal contact portion and a threaded portion constitute a contact surface of the tubular threaded joint. The following Patent Document 1 discloses an example of the special threaded joint.

To fasten the tubular threaded joint, one end (pin) of an oil country tubular good is inserted into a coupling (box), and the male thread and the female thread are fastened until the shoulder portions of the pin and the box come into contact with each other and interfere each other with appropriate torque. According to this, the seal portions of the pin and the box come into close contact with each other to form a metal-to-metal seal portion, and thus gastightness of the threaded joint is secured.

During a process of lowering tubing or casing into an oil well, due to various problems, the threaded joint fastened once is loosened, the joint is lifted up once from the oil well, the joint is re-fastened, and the joint is lowered some times. API (American Petroleum Institute) recommends seizure resistance such that seizure called galling does not occur and gastightness is maintained even when fastening (make-up) and loosening (break-out) are repeated ten times.

A viscous liquid lubricant (grease lubricating oil) which contains heavy metal powders called "compound grease" is applied to the contact surface of the threaded joint in advance whenever the fastening is performed so as to increase seizure resistance and gastightness. Such a compound grease is specified in API standard BUL 5A2.

In order to increase the retention of the compound grease or to improve sliding properties, it has been proposed to carry out various types of surface treatments such as a nitriding treatment, various types of plating including zinc plating and dispersal plating, and phosphate chemical conversion treatment on the contact surface of a threaded joint to form one or more layers in order to increase the retention of compound grease or to improve sliding properties. However, as described below, there is a concern that the use of compound grease has an adverse effect on the environment and the human body.

The compound grease contains a large amount of heavy metal powders such as zinc, lead, and copper. When the fastening of the threaded joint is carried out, grease which has been applied is washed off or overflows to an exterior surface, and thus there is a possibility in that particularly, harmful heavy metals such as lead may have an adverse effect on the environment and particularly on sea life. In addition, a process of applying compound grease deteriorates a working environment and working efficiency, and there is also a concern of harmful effects on the human body.

In recent years, as a result of the enactment in 1998 of the OSPAR Convention (Oslo-Paris Convention) for preventing ocean pollution in the Northeast Atlantic, strict restrictions concerning the global environment have been in progress, and in some regions, the use of compound grease has been already restricted. Accordingly, in order to avoid adverse effects on the environment and the human during the excavation of gas wells and oil wells, there is a demand for a threaded joint which is capable of exhibiting excellent seizure resistance without using the compound grease. EP2210931 and WO2012060472 disclose coatings for tubular threaded joints on the basis of a basic metal salt of an aromatic organic acid.

As a threaded joint which may be used for fastening of oil country tubular goods without application of the compound grease, the present inventors have suggested a threaded joint for steel pipes in which a viscous liquid or semisolid lubricating coating is formed in Patent Document 2, and a threaded joint for steel pipes in which a solid lubricating coating is formed in Patent Document 3, respectively.

Patent Document 1: Japanese Unexamined Patent Application, First Publication No. H5-87275
Patent Document 2: Japanese Unexamined Patent Application, First Publication No. 2002-173692
Patent Document 3: PCT International Publication No. WO2009/072486

### DISCLOSURE OF THE INVENTION

In a premium tubular threaded joint provided with seal portions 4a and 4b, and shoulder portions 5a and 5b as shown in FIG. 1, the seal portions 4a and 4b of a pin 1 and a box 2 form a metal-to-metal seal portion during fastening, and thus gastightness is secured.

A torque chart (vertical axis: torque, and horizontal axis: turns) during fastening of this kind of threaded joint is shown in FTG. 2. As shown in the drawing, as rotation takes place, initially, threaded portions of the pin and the box come into contact with each other, and torque gradually increases. Then, when seal portions of the pin and the box come into contact with each other, and a rate of increase in torque increases. When a shoulder portion of the front end of the pin and a shoulder portion of the box come into contact with each other and begin to interfere each other (the torque at the start of this interference is called a shouldering torque: Ts), the torque abruptly increases. When the torque reaches predetermined fastening torque, the fastening is completed.

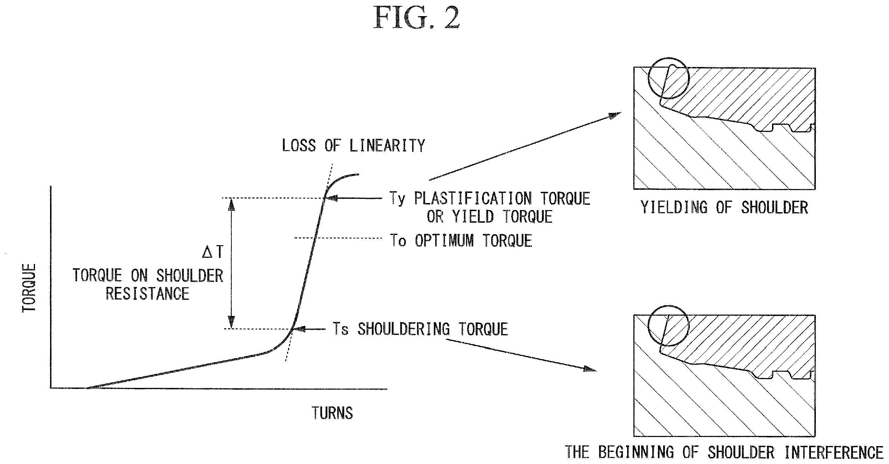

However, in a premium threaded joint used in wells in which a high compressive stress or a bending stress is applied, the fastening takes place with torque higher than common torque in order for the threaded joint not to be loosened. In this case, the shoulder portion of the end surface of the pin and the shoulder portion of the box which comes into contact with the shoulder portion of the pin yield (the torque at this time is called yielding torque: Ty), and the shoulder portions may undergo plastic deformation as shown in FIG. 2.

With regard to a threaded joint which is fastened with high torque, it is advantageous for Ty-Ts (= ΔT: torque on shoulder resistance) to be large. However, in the tubular threaded joint provided with a viscous liquid or semisolid lubricating coating described in Patent Document 1 and Patent Document 2, Ty decreases compared to a case in which compound grease of the related art is applied, and thus ΔT decreases. As a result, optimal fastening torque may not be determined depending on tolerance in an amount of thread interference. In addition, the optimal torque in FIG. 2 represents torque with which an amount of interference necessary for securing gastightness in the seal portions is accomplished to terminate fastening, and the optimal torque is determined in advance for each internal size of a joint or type of a joint.

The invention is to provide a tubular threaded joint provided with a lubricating coating which does not contain a harmful heavy metal, is excellent in seizure resistance, gastightness, and anticorrosive properties, and is capable of securing a large ΔT, and in which yielding of a shoulder portion is not likely to occur even in fastening with high torque.

It has been found that even when a composition of the lubricating coating is changed in order for the coefficient of friction to increase or decrease, generally, Ts and Ty behave in the same manner, and thus ΔT does not vary greatly. For example, when the coefficient of friction of the lubricating coating increases, Ty increases, but Ts also increases (referred to as high shouldering). As a result, in the worst case, a situation in which the shoulder portions do not come into contact with each other even in predetermined fastening torque, and the fastening is not completed (referred to as no shouldering) occurs.

The present inventors have found the following. With regard to a tubular threaded joint provided with a lubricating coating which does not contain a harmful heavy metal imposing a load on the global environment, when a lubricating coating is formed on a contact surface (a threaded portion and an unthreaded metal contact portion) of at least one member of a pin and a box using a composition which contains melamine cyanurate (MCA, melamine cyanuric acid) and a basic metal salt of an aromatic organic acid as an essential component, and which further contains one or more kinds selected from the group consisting of a pine resin-based material (including pine resin and a derivative thereof), wax, a metal soap, and a lubricating powder, a tubular threaded joint, which has sufficient seizure resistance, gastightness, and anticorrosive properties, and a large ΔT, and which does not have a danger of causing no shouldering, may be obtained.

Here, according to an embodiment of the invention, there is provided a composition for forming a lubricating coating to a tubular threaded joint. The composition contains a melamine cyanurate (hereinafter, abbreviated as MCA), a basic metal salt of an aromatic organic acid, and one or more kinds selected from the group consisting of a pine resin-based material, a wax, a metal soap, a lubricating powder.

It is preferable that the amount of the MCA be 0.5 % by mass to 30% by mass on the basis of the total amount of non-volatile components of the composition. Here, the non-volatile components represent components other than a solvent in the composition.

It is preferable that an average particle size of the MCA contained in the composition be 10 µm to 40 µm. Here, the average particle size is defined as a median diameter (50% particle size: D50) of a volume-based particle size distribution obtained by a particle size distribution measuring device using a laser diffraction scattering method as a measurement principle.

From the viewpoint of application properties during coating formation, the composition may contain a volatile organic solvent for low viscosity. It is preferable that the composition substantially do not contain a heavy metal such as lead that is harmful to the human body (specifically, in an amount exceeding 1% by mass on the basis of the total amount of non-volatile components of the composition).

According to another aspect of the invention, there is provided a tubular threaded joint including a pin and a box, each being provided with a contact surface including a threaded portion and an unthreaded metal contact portion. The lubricating coating formed using the composition is provided on the contact surface of at least one member of the pin and the box.

It is preferable that a film thickness of the lubricating coating be 10 µm to 500 µm.

It is preferable that the contact surface of at least one member of the pin and the box which is provided with the lubricating coating be subjected to a surface treatment by blasting, pickling, a phosphate chemical conversion treatment, an oxalate chemical conversion treatment, a borate chemical conversion treatment, electroplating, impact plating, or a surface treatment method selected from two or more kinds thereof before forming the lubricating coating.

In addition, in a case where only the contact surface of one member of the pin and the box is provided with the lubricating coating, it is preferable that the contact surface of the other member of the pin and the box be subjected to the surface treatment by the surface treatment method.

The tubular threaded joint according to the invention is preferably suitable for connecting oil country tubular goods.

In addition, according to still another embodiment of the invention, there is provided a method of connecting a plurality of oil country tubular goods using the tubular threaded joint without applying grease lubricating oil.

Generally, an operation mechanism of the lubricating coating formed from the composition according to the invention is considered as follows.

Fastening (make-up) of the tubular threaded joint is performed by inserting the pin into the box, and by rotating the pin or the box. First, only threaded portions come into contact with each other to screw together, and at a final stage of the fastening, when seal portions and shoulder portions start to come into contact, respectively, and thus a predetermined amount of interference is obtained in the seal portion and the shoulder portion, the fastening is completed.

In the lubricating coating, when a surface pressure is still low at an initial period of shouldering, coefficient of friction is low, and accordingly, Ts decreases. On the other hand, under a high surface pressure (the maximum surface pressure of the seal portions: 1 to 3 GPa) immediately before completion of fastening, the coefficient of friction increases, and thus Ty increases. As a result, ΔT increases. As described above, it is considered that the specific behavior in which the coefficient of friction is different between during low surface pressure sliding and during high surface pressure sliding is exhibited due to combination of the MCA and the basic metal salt of an aromatic organic acid. However, chemical interactions thereof are not sufficiently made clear.

The tubular threaded joint of the invention may reliably exhibit excellent seizure resistance during fastening of oil country tubular goods without applying grease lubricating oil such as compound grease which has been applied to the treaded joint. Accordingly, the tubular threaded joint of the invention may avoid an adverse effect on the global environment and the human body which is caused by the compound grease. In addition, it is not likely for a shoulder portion to yield during the fastening at high torque, and thus a stable metal-to-metal seal portion may be realized with a margin.

In the tubular threaded joint according to the invention, the lubricating coating formed on the contact surface thereof exhibits as a large ΔT as the coating of the grease lubricating oil such as the compound grease containing a harmful heavy metal in the related art, and thus it is possible to perform a fastening process without causing yield or seizure at the shoulder portion even during fastening with high torque. In addition, the seizure may be suppressed even under severe conditions such as unstable drilling work in the sea. In addition, the lubricating coating substantially does not contain a harmful heavy metal such as lead, and thus there is little impact on the global environment. In the tubular threaded joint according to the invention, formation of rust is suppressed. Accordingly, even when fastening and loosening are repeated, a lubricating function is continuously exhibited, and gastightness may be secured after the fastening.

### BRIEF DESCRIPTION OF THE DRAWING

FIG. 1 is a diagram schematically illustrating an unthreaded metal contact portion (a shoulder portion and a seal portion) of a premium threaded joint.
FIG. 2 is a typical torque chart during fastening of a premium tubular threaded joint;
FIG. 3 is a diagram schematically illustrating an assembling configuration of a steel pipe at the time of shipment and a coupling.
FIG. 4 is a diagram schematically illustrating a cross-section of the premium tubular threaded joint.

### DESCRIPTION OF EMBODIMENTS

Hereinafter, a tubular threaded joint and a lubricating coating forming composition according to the invention will be described in detail for illustration.

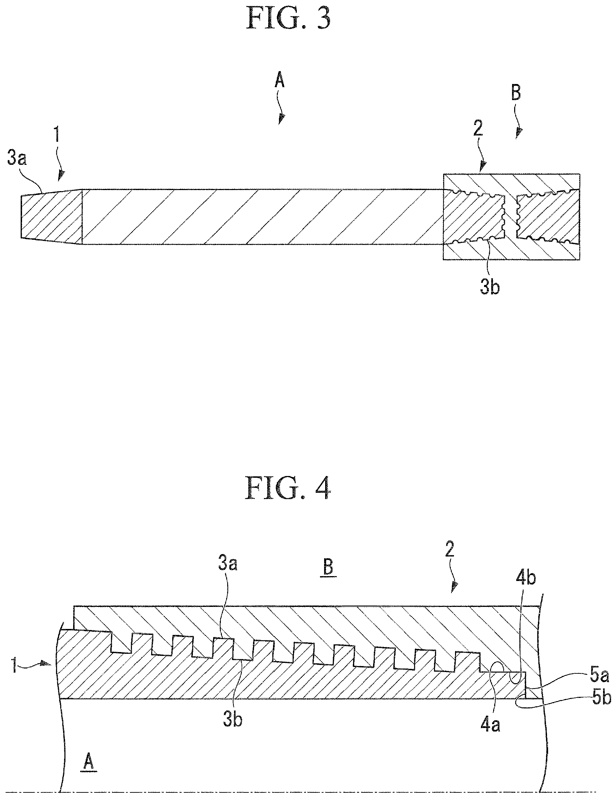

FIG. 3 schematically shows a state of a steel pipe for oil country tubular goods at the time of shipment and a coupling. A pin 1 having a male threaded portion 3a on an external surface is formed on both ends of a steel pipe A, and a box 2 having a female threaded portion 3b on an internal surface is formed on both sides of a coupling B. The pin represents a threaded joint member on a side having the male thread, and the box represents a threaded joint member on a side having the female thread. The coupling B may be tightly fastened in advance to one end of the steel pipe A. Although not shown, protectors for protection of threaded portions are mounted to both of the pin in another end of the steel pipe A and the box in another end of the coupling B each of which is not fastened, before shipment, and those protectors are detached before using the threaded joint.

In a typical tubular threaded joint, as shown in the drawing, the pin is formed on the external surface of both ends of the steel pipe, and the box is formed on the internal surface of the coupling that is a separate component. There is also an integral type tubular threaded joint in which one end of the steel pipe is formed as a pin, and the other end is formed as a box without using the coupling. The tubular threaded joint of the invention is applicable to any of these types.

FIG. 4 schematically illustrates a configuration of a representative tubular threaded joint (hereinafter, referred to as simply "threaded joint"). The threaded joint is constituted by a pin 1 that is formed on an external surface of an end of the steel pipe A, and a box 2 that is formed on an internal surface of the coupling B. The pin 1 includes a male threaded portion 3a, a seal portion 4a that is positioned at the front end of the steel pipe, and a shoulder portion 5a of an end surface. In correspondence with this configuration, the box 2 includes a female threaded portion 3b, and a seal portion 4b and a shoulder portion 5b on an inner side of the female threaded portion 3b. The seal portion and the shoulder portion constitute an unthreaded metal contact portion.

The threaded portions 3a and 3b, the seal portions 4a and 4b, and the shoulder portions 5a and 5b of the pin 1 and the box 2 (in other words, unthreaded metal contact portions and threaded portions) become contact surfaces of the threaded joint. Seizure resistance, gastightness, and anticorrosive properties are required for the contact surface. Therefore, in the related art, compound grease containing a heavy metal powder is applied to the contact surface or viscous liquid or semisolid lubricating coating is formed on the contact surface. However, as described above, the former has an adverse effect on the human body or the environment, and in the latter, ΔT is low during fastening with high torque, and thus there is a problem in that the shoulder portion may yield before fastening.

According to the invention, the contact surface of at least one member of the pin and the box is covered with the lubricating coating. The lubricating coating exhibits an excellent lubricating performance and an gastightness maintaining effect during fastening of the threaded joint like the compound grease in the related art. Accordingly, even when the compound grease is not used, and fastening and loosening are repeated with high torque, the threaded joint of the invention may prevent the seizure of the threaded joint without yield of the shoulder portions, and gastightness after the fastening may be secured.

It is preferable that an underlayer (that is, the contact surface of the threaded joint) of the lubricating coating be roughened. The roughening may be accomplished by directly roughening a steel surface by blasting or pickling, or by forming an underlayer coating having a rough surface on the steel surface before forming the lubricating coating.

The lubricating coating may be formed as follows. A lubricating coating forming composition that is diluted with an appropriate volatile organic solvent as necessary is prepared, and the composition is applied by an appropriate method such as brush application, spraying, and immersion, and then the solvent is vaporized and dried according to circumstances.

The lubricating coating may be formed on both of the contact surfaces of the pin and the box. However, as shown in FIG. 3, in a case where the pin and the box are fastened at the time of shipment, it is sufficient that the lubricating coating is formed on a contact surface of either the pin or the box. In this case, since a surface treatment or application work for forming the lubricating coating in the short coupling is easier than that in the long steel pipe, the lubricating coating is preferably formed on the contact surface of the coupling (commonly, the contact surface of the box). In a case where the pin and the box are not fastened at the time of shipment, it is preferable that the lubricating coating be formed on the contact surfaces of both of the pin and the box to add anticorrosive properties in combination with a lubricating surface. According to this, a decrease in lubricating properties or gastightness due to formation of rust may be prevented.

In addition, it is necessary for the lubricating coating to be coated on the entirety of the contact surface of the pin and/or the box, but a case in which a part (for example, only the unthreaded metal contact portion) of the contact surface is coated is also included in the invention.

### [Lubricating Coating]

The lubricating coating is formed on the contact surface of at least one of the pin and the box of the threaded joint so as to prevent the seizure during fastening between the steel pipes using the threaded joint, and formation of rust during storage. In the invention, to form a lubricating coating in which ΔT is large and thus the shoulder portion does not yield even during tight fastening with high fastening torque, and which is capable of preventing the seizure and formation of rust during storage, the lubricating coating contains MCA (melamine cyanurate) and a basic metal salt of an aromatic organic acid.

The MCA is an organic salt formed from melamine and cyanuric acid, and is a white powder which has a chemical formula expressed by C₃H₆N₆·C₃H₃N₃O₃ and which is considered to have a mica-shaped crystal structure in which the melamine and the cyanuric acid are hydrogen-bonded. The MCA has a heat-resistant temperature as high as 250°C to 350°C, and a non-flammable gas (N₂) is generated during combustion, and thus the MCA is mainly used as a non-halogen flame retardant, and a flame retardant promoter with respect to various kinds of thermoplastic or thermosetting resins. Furthermore, the MCA has a mica-shaped layered crystal structure, and thus the MCA is also used as a white lubricating oil additive.

However, practically, a lubricating system of the MCA is not well known except that the MCA has a cleavable layered crystal structure. In the invention, the lubricating coating is formed on the contact surface of the tubular threaded joint in combination of the MCA and the basic metal salt of an aromatic organic acid. Accordingly, a specific frictional behavior in which coefficient of friction during low surface pressure sliding is low, and coefficient of friction during high surface pressure sliding is high is exhibited. This behavior becomes apparent for the first time in the invention, and the mechanism has not been clear yet.

With regard to the MCA, MCA that is subjected to a surface treatment by a coupling agent such as a silane coupling agent and a titanium coupling agent is commercially available. The surface-treated MCA has also the above-described effect, and thus may be used in the same manner.

The amount of the MCA in the lubricating coating (that is, the amount on the basis of the total amount of non-volatile components in the lubricating coating forming composition) is set to be within a range of 0.5% by mass to 30% by mass. When the amount is less than 0.5% by mass, the effect of increasing ΔT becomes insufficient. On the other hand, when the amount exceeds 30% by mass, flowability as a lubricating coating decreases, and thus lubricating properties such as seizure resistance may be deficient. More preferably, the amount of MCA is 1 % by mass or more, and still more preferably 2% by mass or more. The upper limit thereof is preferably set to 20% by mass or less.

The basic metal salt of an aromatic organic acid increases the seizure prevention effect and anticorrosive effect of the lubricating coating formed on the contact surface of the tubular threaded joint, and exhibits specific frictional behavior in which the coefficient of friction is low during the low surface pressure sliding, and the coefficient of friction is high during the high surface pressure sliding when being used in combination with MCA. Accordingly, the basic metal salt exhibits an effect of increasing ΔT.

The MCA having an average particle size of approximately 0.5 µm to 5 µm is commonly used from the viewpoint of dispersibility to a base. The MCA is frequently classified as a solid lubricating agent. On the other hand, an effect of improving lubricating properties is not sufficiently verified, and with regard to conditions under which the operation mechanism and effect are exhibited, and the like, there are many unclear points.

According to investigation of the present inventors, as the MCA contained in the lubricating coating, MCA having a large average particle size is preferable so as to obtain a more sufficient ΔT improving effect.

A preferable average particle size of the MCA is 10 µm to 40 µm. When the average particle size is 10 µm or less, the ΔT improving effect is not sufficient. On the other hand, when the average particle size exceeds 40 µm, the MCA is not likely to be uniformly distributed on a frictional sliding interface during screw fastening, and thus the ΔT improving effect is not sufficiently obtained. Here, the average particle size is defined as a median diameter (50% particle size: D50) of a volume-based particle size distribution obtained by a particle size distribution measuring device using a laser diffraction scattering method as a measurement principle.

A mechanism in which ΔT is significantly improved when MCA having a relatively coarse average particle size is used in combination with the basic organic metal salt is assumed as follows.

A basic organic metal salt having both of a lipophilic group and a hydrophilic group, that is, a basic organic metal salt considered to have the same operation as a surfactant is aligned on a surface of MCA having slightly high hydrophilicity, and allows coarse MCA to be uniformly dispersed to a base that is an oil base. As a result, the coarse MCA is reliably introduced to the high surface pressure sliding interface during fastening of the threaded joint. The coarse MCA that is introduced to the sliding interface exhibits an operation of increasing a frictional resistance of the sliding interface during a process of being pressed and being deformed while preventing seizure (preventing contact between metals).

The basic metal salt of an aromatic organic acid is a salt constituted by an aromatic organic acid and a surplus alkali (alkali metal or alkali earth metal). Specific example thereof includes basic sulfonate, basic salicylate, basic phenate, and basic carboxylate. All of the basic metal salts of an aromatic organic acid are materials in which a surplus content of alkali is dispersed in oil as a metal salt of a colloidal fine particle and which are present in a grease form or a semisolid form at ambient temperature. The basic metal salts of an aromatic organic acid show a significant heavy-duty anticorrosion performance, and exhibit a lubricating operation by physical absorption of surplus metal salts in a colloidal fine particle state, or chemical absorption of organic acid groups, and the like.

Alkali that constitutes a cation portion of the basic metal salts of an aromatic organic acid may be an alkali metal or alkali earth metal. However, the alkali is preferably alkali earth metal, particularly, calcium, barium, or magnesium. Even when any of these is used, the same effect may be obtained.

With regard to the basic metal salts of an aromatic organic acid, the higher a base value thereof is, the further an amount of fine particle metal salts that functions as a solid lubricant increases. Accordingly, high lubricating properties (seizure resistance) may be imparted due to the lubricating coating. In addition, when basicity becomes higher to a certain degree, there is an operation of neutralizing an acid component, and thus anticorrosive power of the lubricating coating also increases. From this reason, it is preferable that basic oil having a base value (JIS K2501) (in a case of using two or more kinds, a weighted average value of base values for which an amount is taken into consideration) of 50 mgKOH/g or more be used. However, when the base value exceeds 500 mgKOH/g, hydrophilicity increases, and anticorrosive properties also begin to decreases, and thus rust may occur. A preferable base value is 100 mgKOH/g to 500 mgKOH/g, and more preferably 250 mgKOH/g to 450 mgKOH/g.

As described above, the basic metal salts of an aromatic organic acid are grease type or semisolid materials, and may achieve a function of a base of the lubricating coating. Accordingly, the basic metal salts are contained from 20 to 70% by mass in the lubricating coating. The lower limit of the amount is 20% by mass and more preferably 40% by mass or more.

The total amount of the MCA and the basic metal salts of an aromatic organic acid in the lubricating coating is preferably set to 45% by mass to 95% by mass, and more preferably 50% by mass to 90% by mass.

The lubricating coating forming composition according to to the invention further contains one or more kinds selected from the group consisting of a pine resin-based material, a wax, a metal soap, and a lubricating powder in addition to the two kinds of essential components. In the following description, these components are collectively referred to as a lubricating selective component. When the lubricating coating does not contain at least one kind of lubricating selective component selected from the above components, adhesiveness between the lubricating coating that is formed and a surface of a base material, or sufficient coating strength against the high surface pressure during frictional sliding may not be obtained, and as a result, a lubricating performance, particularly, seizure resistance becomes deficient.

When the lubricating coating contains the pine resin-based material that is a material selected from pine resin and a derivative thereof, the pine resin-based material undergoes a high surface pressure in a friction surface, and becomes highly viscous, and thus the pine resin-based material is effective for increasing ΔT of the coating.

The pine resin is a natural resin secreted from wood of genus pinus. The pine resin is constituted by three elements of carbon, hydrogen, and oxygen. Main components of the fine tree include resin acid (rosin acid) expressed by C₂₀H₃₀O₂, and colophane acid expressed by CₙHₙ₊₁₀O₄. Examples of a representative resin acid include abietic acid, d-pimaric acid, and i-pimaric acid.

The pine resin (rosin) is largely classified into tall rosin, gum rosin, and wood rosin according to a collection method, and any of these may be used. In addition, various kinds of pine rosin derivatives such as rosin ester, hydrogenated rosin, polymerized rosin, and dismutated rosin are commercially available, and these pine rosin derivatives may also be used as the pine resin-based material.

The amount of the pine resin-based material including the rosin and a derivative thereof in the lubricating coating is preferably set to 30% by mass or less. When the amount exceeds 30% by mass, the composition that is used for forming the coating becomes highly viscous, and thus there is a concern that coating forming properties may be damaged. To sufficiently obtain the above-described effect of the pine resin-based material, it is preferable that 5% by mass or more of rosins be contained in the lubricating coating, and more preferably 5% by mass to 20% by mass.

Wax not only has a seizure prevention effect due to a decrease in friction of the lubricating coating, but also decreases flowability of the lubricating coating. Accordingly, the wax is helpful to increase coating strength. Any of animal wax, vegetable wax, mineral wax, and synthetic wax may be used. Examples of wax that is usable include beeswax, spermaceti (the above, animal wax), Japan wax, carnauba wax, candelilla wax, rice wax (the above, vegetable wax), paraffin wax, microcrystalline wax, petrolatum, montan wax, ozocerite, ceresin (the above, mineral wax), oxidation wax, polyethylene wax, Fischer-Tropsch wax, amide wax, hydrogenated castor oil (castor wax) (the above, synthetic wax), and the like. Among these, the paraffin wax having a molecular weight of 150 to 500 is preferable.

The amount of wax in the lubricating coating is preferably set to 25% by mass or less. When the amount exceeds 25% by mass, adhesiveness or strength of the lubricating coating may decrease. The amount is preferably 20% by mass or less. The lower limit of the amount of the wax is not particularly limited, but it is preferable that 2% by mass or more of wax be contained so as to reliably obtain the effect of the wax.

The metal soap that is a salt of a fatty acid with a metal other than alkali metal may be contained in the lubricating coating so as to increase the seizure prevention effect and the anticorrosive effect of the lubricating coating. The amount thereof in the coating is set to 30% by mass or less. When the amount exceeds 30% by mass, adhesiveness or strength of the lubricating coating may decrease. The lower limit of the amount of the metal soap is not particularly limited, but it is preferable that 2% by mass or more of metal soap be contained so as to reliably obtain the above-described effect.

In view of lubricating properties or anticorrosive properties, it is preferable that the fatty acid of the metal soap be a fatty acid having 12 to 30 carbon atoms. The fatty acid may be either a saturated fatty acid or an unsaturated fatty acid. In addition, the fatty acid may be any of a mixed fatty acid derived from natural fat and oil such as beef tallow, lard, wool fat, palm oil, rapeseed oil, and coconut oil, and a single compound such as lauric acid, tridecylic acid, myristic acid, palmitic acid, lanopalmitic acid, stearic acid, isostearic acid, oleic acid, elaidic acid, arachic acid, behenic acid, erucic acid, lignoceric acid, lanoceric acid, sulfonic acid, salicylic acid, and carboxylic acid. As a type of the metal salt, a calcium salt is preferable, but other alkali earth metal salts or zinc salts may be used. The salt may be either a neutral salt or a basic salt.

The lubricating powder improves the strength of the lubricating coating or suppresses flowability thereof at a high temperature while maintaining Ts of the lubricating coating to be low, and thus the lubricating powder may improve the seizure resistance. As the lubricating powder, a nontoxic and harmless powder which is used as a solid lubricant is preferably used. Examples of a preferable lubricating powder include graphite, tungsten disulfide (WS₂), molybdenum disulfide (MoS₂), tin disulfide, graphite fluoride, boron nitride (BN), cryolite, and PTFE (polytetrafluoroethylene). One or more kinds thereof may be used in combination. Graphite is preferable in view of stability in a corrosive environment, an environment aspect, and the like.

Graphite is largely classified into natural graphite and artificial graphite. Natural graphite is less expensive. Natural graphite is classified into flake graphite, vein graphite, and amorphous graphite according to the shape thereof. Among these, amorphous graphite having the lowest crystallinity is preferable in terms of making an increase in ΔT and improvement in seizure resistance compatible with each other. Furthermore, when taking electrical properties or thermal properties into account, amorphous graphite in which an ash amount is 0.2% by mass to 5.5 % by mass, and crystallinity is 98% or less is more preferable. Particularly, amorphous graphite in which crystallinity is 90% to 98% is preferable. The average particle size of graphite is preferably 1 µm to 20 µm, and more preferably 1 µm to 15 µm.

In a case where the lubricating coating contains the lubricating powder, the amount thereof is preferably 0.5% by mass to 20% by mass. When the amount is less than 0.5% by mass, the effect is not sufficient. When the amount exceeds 20% by mass, there is a concern that the operation of other components may be deteriorated. In addition, uniform dispersibility of the lubricating powder or flowability of the lubricating coating during friction may decrease. The amount of the lubricating powder is more preferably 0.5% by mass to 10% by mass. In addition, an average particle size of the lubricating powder which improves seizure resistance is preferably 0.1 µm to 10 µm, and more preferably 1 µm to 5 µm.

Components other than the above-described components, for example, one or more kinds of components selected from organic resins, and various kinds of oils and additives (for example, an extreme pressure agent) that are commonly used in lubricating oil may be mixed in the lubricating coating to increase uniform dispersibility of the lubricating powder in the lubricating coating, or to improve characteristics or properties of the lubricating coating. The oils represent lubricating components (viscous liquid material (including greasy material)) which may be used in the lubricating oil and which are in a liquid form at room temperature, and the oils themselves have lubricating properties. Examples of the oils that may be used include synthetic ester, natural fats and oils, mineral oil, and the like.

An organic resin, particularly, a thermoplastic resin functions to suppress surface tackiness of the lubricating coating, and to increase a film thickness. In addition, when being introduced to a frictional interface, the organic resin functions to increase seizure resistance, or to reduce friction even when receiving high fastening torque (high surface pressure) when metal portions come into contact with each other. Accordingly, the organic resin may be contained in the lubricating coating.

Examples of the thermoplastic resin include polyethylene resins, polypropylene resins, polystyrene resins, polymethyl acrylate resins, styrene/acrylic acid ester copolymer resins, polyamide resin, polybutene (polybutylene) resins, and the like. Copolymers or blends of these may be used, or copolymers or blends of these with other thermoplastic resins may also be used. The thermoplastic resin preferably has a density (JIS K 7112) in a range of 0.9 to 1.2, and thermal deformation temperature (JIS K 7206) is preferably in a range of 50°C to 150°C to easily deform at a frictional surface so as to allow the lubricating properties to be exhibited. The polybutene resins having high viscosity at a high surface pressure are preferable.

The thermoplastic resin is preferably in the form of powders of 0.05 µm to 30 µm, and the amount of the thermoplastic resin in the coating is preferably set to 10% by mass or less.

Examples of the natural fats and oils that may be used as oil include beef tallow, lard, wool fat, palm oil, rapeseed oil, coconut oil, and the like. In addition, mineral oil (including synthetic mineral oil) having viscosity of 10 cSt to 300 cSt at 40°C may also be used as oil. Examples of synthetic ester that may be used as oil include fatty acid monoester, dibasic acid diester, and fatty acid ester of trimethylol propane or pentaerythritol, and the like. In a case where the oil is contained in the lubricating coating, the amount of the oil in the lubricating coating is preferably set to 5% by mass or less.

Examples of the extreme pressure agent include, but are not limited to, sulfurized fats and oils, polysulfide, phosphate, phosphite, thiophosphate, and dithiophosphoric acid metal salt, and the like. In a case where the extreme pressure agent is contained, the amount thereof in the lubricating coating is preferably set within a range of 0.05% by mass to 5% by mass.

It is preferable that the lubricating coating substantially do not contain a harmful heavy metal. The compound grease contains a large amount of powders of a soft heavy metal such as lead and zinc is to prevent seizure (galling) by suppressing contact between metals. In the invention, this function is provided in combination of the MCA and the basic metal salt of an aromatic organic acid which are contained in the lubricating coating, and thus even when the heavy metal powder is not contained at all, the coating may exhibit a sufficient lubricating performance.

The lubricating coating is formed as follows. A mixture of the constituent components is made into liquid by solvent addition and/or heating, and the liquid mixture is applied to the contact surface of at least one member of the pin and the box of the threaded joint, and the coated film is dried as necessary.

The application by heating may be realized by a so-called hot melt application method. The mixture of the constituent components of the lubricating coating is heated to a temperature at which applicable viscosity is obtained, and the mixture is sprayed onto an application surface from a sprayer provided with a heat retention function. The application surface may be preheated, for example, to approximately the same temperature as that of a material to be applied.

In a case of performing the application at an ambient temperature, the lubricating coating forming composition is prepared by adding a volatile organic solvent to the mixture of the constituent components of the lubricating coating. The volatile organic solvent is different from base oil of the lubricating oil, and evaporates during a coating forming process, and thus the volatile organic solvent substantially does not remain in the lubricating coating. "Volatile" represents that there is a tendency for the organic solvent to evaporate at a coating state at a temperature of room temperature to 150°C. However, the lubricating coating of the invention may be a viscous liquid or semisolid, and thus a little amount solvent is permitted to remain.

Examples of the solvent is not particularly limited, but examples of a volatile organic solvent which is suitable for use in the invention include petroleum solvents such as a solvent corresponding to industrial gasoline defined by JIS K 2201, mineral sprit, aromatic petroleum naphtha, xylene, and Cellosolve. A mixture of two or more kinds of these may be used. A solvent having the flash point of 30°C or higher, an initial boiling point of 150°C or higher, and a final boiling point of 210°C or higher is preferable from the viewpoints that it is relatively easy to handle, and evaporates rapidly, and thus the drying time may be short.

The lubricating coating forming composition may contain an antioxidant, a preservative, and a colorant, in addition to the above-described components.

Viscosity (dynamic viscosity: unit is cSt, B-type viscosity form) of the lubricating coating forming composition may be appropriately selected by adding an organic solvent or the like in accordance with an application method. In a case of spray application or immersion at an ambient temperature, viscosity at 40°C is preferably 4,000 cSt or less, and in a case of brushing, viscosity at 60°C is preferably 1,000 cSt or less.

The film thickness of the lubricating coating is preferably set within a range of 10 µm to 500 µm as described later. It is preferable that the lubricating coating have a thickness sufficient to bury minute gaps such as a gap between thread ridges in the contact surface. When the film thickness is too small, an effect provided to the frictional surface may not be expected. From the reason, the film thickness of the lubricating coating is preferably set to 10 µm or more.

Contact surfaces of the box and the pin come into contact with each other during fastening at which lubrication is necessary. Accordingly, it is sufficient that only any one of the pin and the box is treated for lubrication. However, from the viewpoint of anticorrosion of the pin or the box which is exposed to the air, particularly, during storage, it is preferable to form the lubricating coating on both of the pin and the box. The minimum film thickness necessary for the anticorrosion is 10 µm. Accordingly, in a case where separate protective means for anticorrosion (for example, previous fastening of the pin and the box, or mounting of a protector) is not provided, it is preferable that the coating of 10 µm or more be formed on both of the pin and the box.

On the other hand, when the lubricating coating is too thick, the lubricant becomes useless, and this is retrogressive against prevention of environmental pollution that is one object of the invention. In light of this, it is preferable that the upper limit of the film thickness of the lubricating coating be set to approximately 500 µm. The film thickness of the lubricating coating is more preferably 15 µm to 200 µm. However, as described later, when surface roughness of an underlayer of the contact surface is made to be large, it is preferable that the film thickness of the lubricating coating be made to be larger than Rmax of the underlayer. The film thickness in a case where the underlayer is rough is an average value of the film thickness of the entirety of the coating which may be calculated from the area, mass, and density of the coating.

In a general tendency with regard to properties of the lubricating coating, when oil is contained to a certain degree, the lubricating coating becomes a viscous liquid. In a case where an amount of oil is small, or oil is not contained, the lubricating coating becomes a semisolid.

### [Surface Treatment]

With regard to the tubular threaded joint in which the lubricating coating is formed on the contact surface of the pin and/or the box according to the invention, when the contact surface covered with the coating is subjected to a surface treatment for roughening, and thus surface roughness is made to be larger than 3 µm to 5 µm that is surface roughness after grinding, the seizure resistance is improved in many cases. Accordingly, it is preferable that the contact surface be subjected to the surface treatment for roughening before forming the lubricating coating.

Examples of the surface treatment include blasting by shooting a blasting material such as spherical shot and angular grit, and pickling by immersion in a strong acid solution such as sulfuric acid, hydrochloric acid, nitric acid, and hydrofluoric acid for roughening the surface. In addition, the examples include a chemical conversion treatment such as a phosphate treatment, an oxalate treatment, and a borate treatment (roughness on a crystal surface increases along with growth of crystals that are generated), electroplating with metals such as Cu, Fe, Sn, and Zn, or alloys thereof (convex portions are preferentially plated, and thus the surface is slightly roughened), impact plating capable of forming a porous plated coating. In addition, as one kind of electroplating, composite plating to form a plated coating in which solid fine particles are dispersed in metal is possible as a method of forming a roughened surface in order for the solid fine particles to project from plated coating.

Any surface treatment method of the contact surface is preferably performed in such a manner that the surface roughness Rmax obtained by the roughening of the surface treatment becomes 5 µm to 40 µm. When Rmax is less than 5 µm, adhesiveness with the lubricating coating or coating retention properties may not be sufficient. On the other hand, when Rmax exceeds 40 µm, friction increases, and thus when undergoing a high surface pressure, the coating may not withstand a shearing force and a compressive force. Therefore, the coating may be fractured or be peeled off. The surface treatment for the roughening may be performed in combination of two or more kinds of the treatments, and as a treatment method thereof, a method known in the related art may be used.

In view of adhesiveness of the lubricating coating, a surface treatment capable of forming a porous coating, that is, the chemical treatment and the impact plating are preferable. In this case, the film thickness of the porous coating is preferably set to 5 µm or more so as to allow Rmax of the porous coating to be 5 µm or more. The upper limit of the film thickness is not particularly specified, but the upper limit is commonly 50 µm or less, and preferably 40 µm or less. When the lubricating coating is formed on the porous coating formed by the surface treatment, adhesiveness with the lubricating coating increases due to an "anchor effect". As a result, even when fastening and loosening are repeated, the solid lubricating coating is not likely to be peeled off, and thus contact between metals is effectively prevented. As a result, seizure resistance, gastightness, and corrosion resistance are further improved.

Examples of particularly preferable surface treatment for forming the porous coating include formation of a coating of zinc or a zinc-iron alloy (porous metal coating) by a phosphate chemical conversion treatment (treatment using manganese phosphate, zinc phosphate, iron manganese phosphate, or zinc calcium phosphate), and impact plating. From the viewpoint of adhesiveness, the manganese phosphate coating is preferable, and from the viewpoint of corrosion resistance, the coating of zinc or a zinc-iron alloy on which sacrificial protection due to zinc may be expected is more preferable.

The phosphate chemical conversion treatment may be performed by immersion or spraying according to a common method. As a chemical treatment solution, an acidic phosphate treatment solution for use in general galvanizing material may be used. For example, a chemical conversion treatment of a zinc phosphate-based solution containing 1 g/L to 150 g/L of phosphate ions, 3 g/L to 70 g/L of zinc ions, 1 g/L to 100 g/L of nitrate ions, and 0 g/L to 30 g/L of nickel ions may be exemplified. In addition, a manganese phosphate-based chemical conversion treatment solution that is commonly used in the threaded joint may be used. The temperature of the solution may be from an ambient temperature to 100°C, and a treatment time may be up to 15 minutes depending on a desired film thickness. In order to accelerate the formation of the coating, prior to the phosphate treatment, an aqueous surface conditioning solution containing colloidal titanium may be supplied to the surface to be treated. After the phosphate treatment, the treated surface is preferably washed with cold or warm water prior to drying.

The impact plating may be performed by mechanical plating in which particles are allowed to collide with a material to be plated inside a rotating barrel, or by shooting plating in which particles are allowed to collide with a material to be plated using a blasting apparatus. In the present invention, it is sufficient to perform the plating only on the contact surface, and thus it is preferable to employ the shooting plating capable of performing localized plating.

For example, a material to be shot, which is constituted by a powder in which an iron-based core is coated with zinc or a zinc alloy, is shot against a contact surface to be coated. The amount of zinc or a zinc alloy in the particles is preferably within a range of 20% by mass to 60% by mass, and a particle size of the particles is preferably within a range of 0.2 mm to 1.5 mm. Only the zinc or zinc alloy that is a covering layer of the particles adheres to the contact surface of a base body by the shooting, and a porous coating of zinc or a zinc alloy is formed on the contact surface. The shooting plating may form a porous plated metal coating with good adhesiveness on a steel surface regardless of a material quality of the steel.

The thickness of the zinc or zinc alloy layer formed by the impact plating is preferably 5 µm to 40 µm from the viewpoints of both of the corrosion resistance and the adhesiveness. When the thickness is less than 5 µm, sufficient corrosion resistance is not secured, and when the thickness exceeds 40 µm, the adhesiveness with the lubricating coating may deteriorate.

The above-described surface treatment may be performed in combination of two or more kinds thereof.

Although a roughening effect is very little, when a specific single layer or multi-layer electroplating is performed as another surface treatment, adhesiveness between the lubricating coating and an underlayer increases, and thus the seizure resistance of the tubular threaded joint may be improved.

As such a surface treatment of the lubricating coating, electroplating of metals such as Cu, Sn, and Ni, or alloys thereof may be exemplified. Plating may be single-layer plating, or multi-layer plating of two or more layers. Specific examples of this kind of electroplating include Cu plating, Sn plating, and Ni plating, as well as Cu-Sn alloy plating, Cu-Sn-Zn alloy plating, two-layer plating by Cu plating-Sn plating, and three-layer plating by Ni plating-Cu plating-Sn plating which are disclosed in Japanese Unexamined Patent Application, First Publication No. 2003-74763. In a tubular threaded joint formed from a steel having a Cr content more than 5%, seizure may significantly occur, and thus it is preferable to perform single-layer plating of a Cu-Sn alloy or a Cu-Sn-Zn alloy, or multi-layer metal plating in combination of two or more layer plating selected from the alloy plating, Cu plating, Sn plating, and Ni plating, for example, two-layer plating of Cu plating-Sn plating, two-layer plating of Ni plating-Sn plating, or two-layer plating of Ni plating-Cu/Sn/Zn alloy plating, and three-layer plating of Ni plating-Cu plating-Sn plating as the surface treatment.

Such plating may be formed according to a method disclosed in Japanese Unexamined Patent Application, First Publication No. 2003-74763. In the case of the multi-layer plating, a coated film (commonly, Ni plating) of the lowest layer is preferably formed as a very thin coated layer having a film thickness less than 1 µm which is called strike plating. The film thickness (in a case of multi-layer plating, the total film thickness) of the plating is preferably set within a range of 5 µm to 15 µm.

### [Surface Treatment of Counterpart Member]

When a solid coating is formed on the contact surface of one member of the pin and the box (for example, the box) of the tubular threaded joint according to the present invention, the contact surface of the other member (for example, the pin) which is not coated with the solid coating may be left in an untreated state, but preferably, the other member is subjected to the above-described surface treatment to roughen the contact surface. That is, the surface roughening may be performed by employing a method selected from blasting, pickling, a phosphate chemical conversion treatment, an oxalate chemical conversion treatment, a borate chemical conversion treatment, electroplating, impact plating, and a combination of two or more of these methods. As a result, when the one member is fastened to the other member covered with the solid coating according to the invention, the contact surface of the other member not having a solid coating exhibits a satisfactory solid coating retention properties due to the anchor effect produced by the surface roughening, thereby increasing the seizure resistance of the tubular threaded joint.

In order to impart anticorrosive properties, a known anticorrosive coating such as a coating of a UV-curable resin or a thermosetting resin may be formed after the surface treatment as required. By preventing the contact surface from being exposed to the air by this anticorrosive coating, even when the contact surface is brought into contact with water in relation to a dew point during storage, the occurrence of rust on the contact surface is prevented.

Since there is no particular restriction to the surface treatment of the contact surface of the other member, the contact surface may be subjected to another surface treatment. For example, various kinds of solid coatings (for example, solid lubricating coating) different from that of the invention may be formed.

### EXAMPLES

The effects of the invention will be illustrated by the following Examples and Comparative Examples. In the following description, a contact surface including a threaded portion and an unthreaded metal contact portion of the pin is referred to as "pin surface", and a contact surface including a threaded portion and an unthreaded metal contact portion of the box is referred to as "box surface". Surface roughness is Rmax. In addition, % represents % by mass unless otherwise stated.

A surface treatment shown in Table 2 was performed with respect to a pin surface and a box surface of a premium threaded joint VAM TOP (registered trademark) (outer diameter: 17.78 cm (7 inches), thickness: 1.036 cm (0.408 inches) formed from Cr-Mo steel A or 13%Cr steel B shown in Table 1. Then, a lubricating coating was formed on the pin surface and the box surface, which was subjected to the surface treatment, by an illustrated application method using a composition shown in Table 3 (MCA and a basic metal salt of an aromatic organic acid are illustrated as an essential component, and a pine resin-based material, a wax, a metal soap, and a lubricating powder are illustrated as a selective component). Accordingly, the lubricating coating formed on the pin surface and the box surface had the same composition.

The lubricating coating were formed by the following several application methods except for Comparative Example 1 using compound grease, all of the lubricating coatings has the same thickness of 50 µm.

(1) Ambient-temperature spray method: a lubricating coating forming composition prepared by adding 30 parts by mass of a volatile organic solvent (mineral sprit: ExxsolTM D40 manufactured by ExxonMobil Chemical) to total of 100 parts by mass of lubricating coating components having a predetermined composition to decrease viscosity was spray-applied at an ambient temperature, and the organic solvent was allowed to vaporize by natural drying to form a lubricating coating;
(2) Heating spray method: a lubricating coating forming composition, which contained lubricating coating components having a predetermined composition and did not contain a solvent, was heated to 130°C to obtain a low viscosity liquid, and was spray-applied from a sprayer provided with a heat retention function onto the pin surface or the box surface which was preheated to 130°C by induction heating. Then, the resultant applied composition was cooled to form a lubricating coating. This is a hot melt method.

Materials used for preparation of the lubricating coating forming composition are as follows.
MCA: MC-4000 manufactured by NISSAN CHEMICAL INDUSTRIES, LTD. (average particle size: 14 µm);
Pine resin-based material: rosin ester (ester gum H) manufactured by Arakawa Chemical Industries, Ltd.;
Basic metal salt of an aromatic organic acid: basic Ca sulfonate (Calcinate C400CLR) (base value: 400 mgKOH/g) manufactured by CHEMTURA Corporation.
Metal soap: Ca stearate (manufactured by DIC Corporation);
wax: paraffin wax manufactured by NIPPON SEIRO CO., LTD;
Graphite: amorphous graphite, a graphite powder manufactured by Nippon Graphite Industries, ltd., blue P (an ash content: 3.79% by mass, crystallinity: 96.9%, average particle size: 7 µm);
Graphite fluoride: CEFBON manufactured by Central Glass Co., Ltd

Among surface treatment coatings employed in the examples, a manganese phosphate coating is executed by immersion in a manganese phosphate chemical conversion treatment solution (PALPHOS M1A manufactured by Nihon Parkerizing Co., Ltd., the same shall apply hereinafter) at 80°C to 95°C for 10 minutes, and zinc phosphate coating is executed by immersion in a chemical conversion treatment solution for zinc phosphate (PALBOND 181X manufactured by Nihon Parkerzing Co., Ltd, the same shall apply hereinafter) at 75°C to 85°C for 10 minutes.

The alloy plating used in the surface treatment was a Cu-Sn-Zn alloy plating having a composition (mass ratio) of Cu:Sn:Zn = 60:35:5.

Surface roughness R shown in Table 2 is exactly Rz, and was measured by Surtronic 10 manufactured by Taylor Hobson Ltd. Rz after grinding finish was 3 µm in each case.

**[Table 1]**

| Steel composition of threaded joint (% by mass: the remainder includes Fe and unavoidable impurities) | | | | | | | | | |
|---|---|---|---|---|---|---|---|---|---|
| Symbol | C | Si | Mn | P | S | Cu | Ni | Cr | Mo |
| A | 0.25 | 0.25 | 0.8 | 0.02 | 0.01 | 0.04 | 0.05 | 0.95 | 0.18 |
| B | 0.19 | 0.25 | 0.8 | 0.02 | 0.01 | 0.04 | 0.1 | 13 | 0.04 |

**[Table 2]**

| No. | Surface treatment | | Steel symbol |
|---|---|---|---|
| | Pin | Box | |
| Example 1 | 1. Grinding finish (R=3) | 1. Grinding finish (R=3) | A |
| | 2. Zn phosphate (R=8) (t=12) | 2. Mn phosphate (R=12) (t=15) | |
| Example 2 | 1. Grinding finish (R=2) | 1. Grinding finish (R=3) | B |
| | | 2. Ni strike plating + Cu plating (t=8) (R=3) | |
| Example 3 | 1. Grinding finish (R=2) | 1. Grinding finish (R=3) | B |
| | | 2. Ni strike plating + Cu-Sn-Zn alloy plating (t=8) (R=2) | |
| Example 4 | 1. Grinding finish (R=3) | 1. Grinding finish (R=3) | A |
| | 2. Zn phosphate (R=8) (t=12) | 2. Mn phosphate (R=12) (t=15) | |
| Example 5 | 1. Grinding finish (R=3) | 1. Grinding finish (R=3) | A |
| | 2. Zn phosphate (R=8) (t=12) | 2. Mn phosphate (R=12) (t=15) | |
| Example 6 | 1. Grinding finish (R=3) | 1. Grinding finish (R=3) | A |
| | 2. Zn phosphate (R=8) (t=12) | 2. Mn phosphate (R=12) (t=15) | |
| Comparative Example 1 | 1. Grinding finish (R=3) | 1. Grinding finish (R=3) | A |
| | 2. Zn phosphate (R=8) (t=12) | 2. Mn phosphate (R=12) (t=15) | |
| Comparative Example 2 | 1. Grinding finish (R=3) | 1. Grinding finish (R=3) | A |
| | 2. Zn phosphate (R=8) (t=12) | 2. Mn phosphate (R=10) (t=12) | |
| Comparative Example 3 | 1. Grinding finish (R=3) | 1. Grinding finish (R=3) | A |
| | 2. Zn phosphate (R=8) (t=12) | 2. Mn phosphate: (R=12) (t=15) | |

| | | | |
|---|---|---|---|
| R: Surface Roughness (µm) t: Thickness (µm) | | | |

**[Table 3]**

| No. | Composition of non-volatile components of lubricating coating forming composition (numerical value in parentheses represents amount in % by mass) | | | | | | Organic solvent (per 100 parts of total amount of non-volatile components) | Application method |
|---|---|---|---|---|---|---|---|---|
| | Essential component | | Selective component | | | | | |
| | MCA | Basic metal salt of aromatic organic acid | Pine resin-based material | Wax | Metal soap | Lubricating powder | | |
| Example 1 | (20) | Basic Ca sulfonate (60) | None | None | Ca stearate (20) | None | 30 parts | Ambient temperature spray |
| Example 2 | (30) | Basic Ca sulfonate (60) | None | Paraffin wax (10) | None | None | 30 parts | Ambient temperature spray |
| Example 3 | (10) | Basic Ca sulfonate (70) | Rosin ester (20) | None | None | None | 30 parts | Ambient temperature spray |
| Example 4 | (2) | Basic Ca sulfonate (52) | Rosin ester (15) | Paraffin wax (10) | Ca stearate (16) | Graphite (5) | 30 parts | Ambient temperature spray |
| Example 5 | (10) | Basic Ca sulfonate (48) | None | Paraffin wax (20) | Ca stearate (17) | Graphite fluoride (5) | None | Heating spray |
| Example 6 | (0.8) | Basic Ca sulfonate (51.2) | None | Paraffin wax (20) | Ca stearate (28) | None | 30 parts | Ambient temperature spray |
| Comparative Example 1 | Compound grease specified in API standard BUL 5A2 (contains heavy metal such as lead, is harmful to human body or environment, but is satisfactory in lubricating properties) | | | | | | | Standard |
| Comparative Example 2 | None | Basic Ca sulfonate (52) | None | Paraffin wax (20) | Ca stearate (28) | None | 30 parts | Ambient temperature spray |
| Comparative Example 3 | (30) | None | None | Paraffin wax (50) | Ca stearate (20) | None | 30 parts | Ambient temperature spray |

As can be seen from Table 2 and Table 3, the surface treatment and the lubricating coating forming treatment in each of the examples and comparative examples were as follows.

### (Examples 1, 4, and 6, and Comparative Examples 2 and 3)

With respect to tubular threaded joint formed from Cr-Mo steel having a composition A shown in Table 1, a manganese phosphate coating (Rz: 12 µm) having a thickness of 15 µm was formed on a box surface after grinding finish, and then a lubricating coating having a film thickness of 50 µm and a composition indicated in each of Examples and Comparative Examples of Table 3 was formed thereon by ambient temperature spray application. A zinc phosphate coating (Rz: 8 µm) having a thickness of 12 µm was formed on a pin surface after grinding finish, and then a lubricating coating was formed thereon in the same manner as the box surface.

### (Example 2)

With respect to a threaded joint formed from 13%Cr steel having a composition B shown in Table 1, first, Ni strike plating was formed on the box surface by electroplating after grinding finish, and then Cu plating having a thickness of 7 µm was formed thereon (total plating thickness: 8 µm). Rz of the plated surface was 2 µm. A lubricating coating having a film thickness of 50 µm and a composition indicated in Example 2 of Table 3 was formed on the plated coating by ambient temperature spray application. A lubricating coating having a thickness of 50 µm was formed on the pin surface (Rz = 2 µm) in the same manner as the box surface.

### (Example 3)

With respect to a threaded joint formed from 13%Cr steel having the composition B shown in Table 1, first, Ni strike plating was formed on the box surface by electroplating after grinding finish, and then Copper-Tin-Zinc alloy plating coating (Rz: 2 µm) was formed thereon (total plating thickness: 8 µm). A lubricating coating having a film thickness of 50 µm and a composition indicated in Example 3 of Table 3 was formed on the plated coating. A lubricating coating was formed on the pin surface (Rz = 2 µm) in the same manner as the box surface.

### (Example 5)

With respect to tubular threaded joint formed from Cr-Mo steel having a composition A shown in Table 1, a manganese phosphate coating (Rz: 12 µm) having a thickness of 15 µm was formed on a box surface after grinding finish, and then a lubricating coating having a film thickness of 50 µm and a composition indicated in Example 5 of Table 3 was formed thereon by heating spray application. A zinc phosphate coating (Rz: 8 µm) having a thickness of 12 µm was formed on a pin surface after grinding finish, and then a lubricating coating was formed thereon in the same manner as the box surface.

### (Comparative Example 1)

With respect to a threaded joint formed from Cr-Mo steel having a composition A shown in Table 1, a manganese phosphate coating (Rz: 12 µm) having a thickness of 15 µm was formed on a box surface after grinding finish. Viscous liquid type compound grease according to API standard was applied onto the manganese phosphate coating (a total application amount in the pin and the box was 50 g, and a total application area was approximately 1,400 cm²). The pin surface was left as it was after the grinding finish, and then the above-described compound grease was applied onto the pin surface.

With respect to the tubular threaded joint in which the surface treatment was performed with respect to the pin surface and the box surface and the lubricating coating was formed thereon, a fastening and loosening test was repetitively performed to evaluate seizure resistance. In the repetitive fastening and loosening test, the fastening of the threaded joint was performed at a fastening speed of 10 rpm and fastening torque of 20 kN·m, and a seizure situation of the pin surface and the box surface after being loosened was examined. In a case where a seizure scratch generated by the fastening was not significant, and re-fastening was possible after trimming, fastening and loosening continued after trimming. The number of times of fastening was set to maximum 10 times. Test results (the number of times of repetitive fastening in which fastening was possible without causing occurrence of seizure) are shown in Table 4.

In addition, with respect to another sample of respective tubular threaded joints, a torque chart was prepared as shown in FIG. 2 by an over-torque test in which fastening was performed by applying fastening torque of 68 kN·m at a fastening speed of 2 rpm, and Ts (shouldering torque), Ty (yield torque), and ΔT (= Ty-Ts, torque on shoulder resistance) were measured on the torque chart.

Ts was torque when a shoulder portion began to interfere, specifically, torque when a torque variation, which was exhibited after the shoulder portion interfered, began to enter a linear region (elastic deformation region) was set as Ts. On the other hand, Ty was torque when plastic deformation began to start, specifically, torque when linearity in a torque variation disappeared together with rotation after reaching Ts, and it began to be away from the linear region was set as Ty. With regard to ΔT (= Ty-Ts), results, which were obtained by relatively evaluating values of ΔT in other examples after setting ΔT obtained in the compound grease in the related art shown in Comparative Example 1 of Table 3 to 100, are shown in Table 4.

**[Table 4]**

| Number | | Fastening and loosening test result (the number of times at which seizure does not occur) | ΔT ratio (= Ty-Ts) Ratio when value in Comparative Example 1 is set to 100 (%) |
|---|---|---|---|
| Examples | 1 | 10 times | 143 |
| | 2 | 8 times | 155 |
| | 3 | 10 times | 141 |
| | 4 | 10 times | 124 |
| | 5 | 10 times | 135 |
| | 6 | 10 times | 108 |
| Comparative Examples | 1 | 10 times | 100 (standard) |
| | 2 | 6 times | 57 |
| | 3 | 3 times | 76 |

As shown in Table 4, in Examples 1 to 6, in the fastening and loosening test, occurrence of seizure was not found in 10 times of fastening and loosening except Example 2 in which the amount of MCA was as high as 30%, and very satisfactory results were obtained. In Example 2, in the fastening loosening test, seizure occurred during the ninth fastening, and thus the test was stopped. However, generally, when the number of times of fastening and loosening is five or more, there is no problem in a practical use, and thus the tubular threaded joint of Example 2 is also sufficiently useful.

From comparison of results of Examples 1 and 2, it was confirmed that when MCA is contained in an amount more than 30% by mass, there is a possibility of decreasing the seizure resistance.

With regard to the value of ΔT in the over-torque test, a relative value of ΔT when ΔT of Comparative Example 1 using the compound grease was set to 100 (hereinafter, referred to simply as ΔT relative value) was higher than 100% in each case, and it could be understood that in the tubular threaded joints of examples, fastening with high torque was possible without causing yielding of the shoulder portion.

The ΔT relative value was as very high as 124% or more except for Example 6. The small amount 0.8% of MCA may be the reason why the ΔT relative value in Example 6 was 1 08% lower than that of other examples. Accordingly, to improve high torque fastening properties, it is preferable for the amount of MCA to be 1% or more, and more preferably 2% or more. As can be understood from results of the examples, as the amount of MCA increases, the ΔT relative value may increase.

From Example 5, it was confirmed that even when the application method during formation of the lubricating coating is either the ambient temperature spray method or heating spray method, the effect of the invention may be obtained.

On the other hand, as shown in Comparative Examples 2 to 3, it could be understood that when the lubricating coating does not contain any one of the MCA and the basic metal salt of an aromatic organic acid, the seizure resistance significantly deteriorates, and the ΔT relative value is much less than 100, and thus not only the seizure resistance but also the high torque fastening properties significantly deteriorate when compared to the compound grease.

To investigate anticorrosive properties of the tubular threaded joint manufactured in Examples 1 to 6, the surface treatment and formation of a lubricating coating as shown in a box of Table 2 were performed with respect to a coupon test specimen (70 mm × 150 mm × 1.0 mm (thickness)) that was separately prepared. This test specimen was provided to a salt spray test (according to JIS Z2371 (corresponding to ISO 9227), temperature: 35°C, 1,000 hours), and a humidity test (according to JIS K5 600-7-2 (corresponding to ISO 6270), temperature: 50°C, humidity: 98%, 200 hours), and whether or not rust occurred was examined. As a result, in the tubular threaded joints of Examples 1 to 6, it was confirmed that rust did not occur in any test.

In addition, the tubular threaded joints of the respective examples were verified by an gastightness test or an operational suitability test in an actual drilling apparatus, all of the joints exhibited a satisfactory result. Since ΔT is larger than that of the compound grease used in the related art, it is verified that even when the fastening torque increases, fastening may be stably performed.

Hereinbefore, an embodiment considered as the most preferable embodiment at this time has been described, but the invention is not limited to the disclosed embodiment as mentioned above. Modifications may be made within a range not departing from a technical idea that can be read out from the entirety of claims and specification, and it should be understood that a threaded joint accompanied with the modification be contained in the technical scope of the invention.

### [Description of Reference Numerals and Signs]

- A:: Steel pipe
- B:: Coupling
- 1:: Pin
- 2:: Box
- 3a:: Male threaded portion
- 3b:: Female threaded portion
- 4a:: Pin side seal portion
- 4b:: Box side seal portion
- 5a:: Pin side shoulder portion
- 5b:: Box side shoulder portion

## Claims

1. A composition for forming a lubricating coating to a tubular threaded joint, the composition comprising:
a melamine cyanurate;
a basic metal salt of an aromatic organic acid; and
one or more kinds selected from the group consisting of a pine resin-based material, a wax, a metal soap, and a lubricating powder, wherein the amount of the melamine cyanurate is 0.5 to 30% by mass on a basis of a total amount of non-volatile components of the composition and wherein the amount of the basic metal salt of an aromatic organic acid is 20 to 70% by mass on a basis of a total amount of non-volatile components of the composition.

2. The composition according to claim 1, further comprising:
a volatile organic solvent.

3. A tubular threaded joint comprising:
a pin and a box, each of which includes a contact surface having a threaded portion and an unthreaded metal contact portion,
wherein the lubricating coating formed using the composition according to any one of claims 1 to 2 is provided on the contact surface of at least one of the pin and the box.

4. The tubular threaded joint according to claim 3,
wherein a film thickness of the lubricating coating is 10 µm to 500 µm.

5. The tubular threaded joint according to claim 3 or 4,
wherein the contact surface of at least one of the pin and the box having the lubricating coating is subjected to a surface treatment by a blasting, a pickling, a phosphate chemical conversion treatment, an oxalate chemical conversion treatment, a borate chemical conversion treatment, an electroplating, an impact plating, or a method selected from two or more kinds thereof before forming the lubricating coating.

6. The tubular threaded joint according to any one of claims 3 to 5,
wherein the lubricating coating is provided on the contact surface of one of the pin and the box, and
the contact surface of the other of the pin and the box is subjected to a surface treatment by a blasting, a pickling, a phosphate chemical conversion treatment, an oxalate chemical conversion treatment, a borate chemical conversion treatment, an electroplating, an impact plating, or a method performed in combination of two or more kinds thereof.

7. The tubular threaded joint according to any one of claims 3 to 6,
wherein the tubular threaded joint is used to connect a plurality of oil country tubular goods.

8. A method of connecting a plurality of oil country tubular goods, the method comprising a step of
connecting the plurality of the oil country tubular goods using the tubular threaded joint according to any one of claims 3 to 7 without using grease lubricating oil.

## Patentansprüche

1. Eine Zusammensetzung zur Bildung einer Schmierbeschichtung auf einer rohrförmigen Gewindeverbindung, wobei die Zusammensetzung umfasst:
ein Melamincyanurat;
ein basisches Metallsalz einer aromatischen organischen Säure; und
eine oder mehrere Arten, ausgewählt aus der Gruppe bestehend aus einem Material auf Kiefernharzbasis, einem Wachs, einer Metallseife und einem Schmiermittelpulver, wobei die Menge des Melamincyanurats 0,5 bis 30 Massen-% auf einer Basis einer Gesamtmenge von nicht-flüchtigen Bestandteilen der Zusammensetzung beträgt und wobei die Menge des basischen Metallsalzes einer aromatischen organischen Säure 20 bis 70 Massen-% auf einer Basis einer Gesamtmenge von nicht-flüchtigen Bestandteilen der Zusammensetzung beträgt.

2. Die Zusammensetzung gemäß Anspruch 1, ferner umfassend:
ein flüchtiges organisches Lösungsmittel.

3. Eine rohrförmige Gewindeverbindung, umfassend:
einen Pin und eine Box, von denen jeder eine Kontaktfläche mit einem Gewindeabschnitt und einem gewindefreien Metallkontaktabschnitt beinhaltet, wobei die Schmierbeschichtung, welche unter Verwendung der Zusammensetzung gemäß einem der Ansprüche 1 bis 2 gebildet wird, auf der Kontaktfläche von mindestens einem von Pin und der Box vorliegt.

4. Die rohrförmige Gewindeverbindung gemäß Anspruch 3,
wobei eine Filmdicke der Schmierbeschichtung 10 µm bis 500 µm beträgt.

5. Die rohrförmige Gewindeverbindung gemäß Anspruch 3 oder 4,
wobei die Kontaktfläche von mindestens einem von Pin und der Box mit der Schmierbeschichtung einer Oberflächenbehandlung durch ein Strahlen, ein Beizen, eine chemische Phosphatumwandlungsbehandlung, eine chemische Oxalatumwandlungsbehandlung, eine chemische Boratumwandlungsbehandlung, ein Galvanisieren, eine Schlagbeschichtung oder ein Verfahren ausgewählt aus zwei oder mehreren Arten davon vor dem Bilden der Schmierbeschichtung unterzogen wird.

6. Die rohrförmige Gewindeverbindung gemäß einem der Ansprüche 3 bis 5,
wobei die Schmierbeschichtung auf der Kontaktfläche von einem von Pin und der Box bereitgestellt ist und
die Kontaktfläche von dem anderen von Pin und der Box einer Oberflächenbehandlung durch ein Strahlen, ein Beizen, eine chemische Phosphatumwandlungsbehandlung, eine chemische Oxalatumwandlungsbehandlung, eine chemische Boratumwandlungsbehandlung, ein Galvanisieren, eine Schlagbeschichtung oder ein Verfahren durchgeführt in Kombination von zwei oder mehreren Arten davon unterzogen wird.

7. Die rohrförmige Gewindeverbindung gemäß einem der Ansprüche 3 bis 6, wobei die rohrförmige Gewindeverbindung verwendet wird, um eine Mehrzahl an industriellen rohrförmigen Gegenständen zu verbinden.

8. Ein Verfahren zum Verbinden einer Mehrzahl an industriellen rohrförmigen Gegenständen, wobei das Verfahren einen Schritt umfasst:
Verbinden der Mehrzahl an industriellen rohrförmigen Gegenständen unter Verwendung der rohrförmigen Gewindeverbindung gemäß einem der Ansprüche 3 bis 7 ohne Verwendung von Schmierfettöl.

## Revendications

1. Composition pour former un revêtement lubrifiant sur un joint fileté tubulaire, la composition comprenant :
un cyanurate de mélamine ;
un sel de métal basique d'un acide organique aromatique ; et
un ou plusieurs types choisis dans le groupe consistant en un matériau à base de résine de pin, une cire, un savon métallique, et une poudre lubrifiante, dans laquelle la quantité du cyanurate de mélamine est de 0,5 à 30 % en masse sur une base d'une quantité totale de constituants non volatils de la composition et dans laquelle la quantité du sel de métal basique d'un acide organique aromatique est de 20 à 70 % en masse sur une base d'une quantité totale de constituants non volatils de la composition.

2. Composition selon la revendication 1, comprenant de plus :
un solvant organique volatil.

3. Joint fileté tubulaire comprenant :
un axe et une boîte, dont chacun inclut une surface de contact présentant une portion filetée et une portion de contact de métal non filetée,
dans lequel le revêtement lubrifiant formé en utilisant la composition selon l'une quelconque des revendications 1 à 2 est fourni sur la surface de contact d'au moins un de l'axe et de la boîte.

4. Joint fileté tubulaire selon la revendication 3,
dans lequel une épaisseur de film du revêtement lubrifiant est de 10 µm à 500 µm.

5. Joint fileté tubulaire selon la revendication 3 ou 4,
dans lequel la surface de contact d'au moins un de l'axe et de la boîte présentant le revêtement lubrifiant est soumise à un traitement de surface par un sablage, un décapage, un traitement de transformation chimique au phosphate, un traitement de transformation chimique à l'oxalate, un traitement de transformation chimique au borate, une électrodéposition, une déposition par impact, ou un procédé choisi parmi deux ou plusieurs types de ceux-ci avant la formation du revêtement lubrifiant.

6. Joint fileté tubulaire selon l'une quelconque des revendications 3 à 5,
dans lequel le revêtement lubrifiant est fourni sur la surface de contact de l'un de l'axe et de la boîte, et
la surface de contact de l'autre de l'axe et de la boîte est soumise à un traitement de surface par un sablage, un décapage, un traitement de transformation chimique au phosphate, un traitement de transformation chimique à l'oxalate, un traitement de transformation chimique au borate, une électrodéposition, une déposition par impact, un procédé réalisé en combinaison de deux ou plusieurs types de ceux-ci.

7. Joint fileté tubulaire selon l'une quelconque des revendications 3 à 6,
dans lequel le joint fileté tubulaire est utilisé pour connecter plusieurs produits tubulaires industriels.

8. Procédé de connexion de plusieurs produits tubulaires industriels, le procédé comprenant une étape de
connexion des plusieurs produits tubulaires industriels en utilisant le joint fileté tubulaire selon l'une quelconque des revendications 3 à 7 sans utiliser d'huile lubrifiante de graisse.
